# EUROPEAN PATENT APPLICATION

(11) **EP 4 414 191 A1**
(43) Date of publication of application: **14.08.2024**
(21) Application number: 24155074.8
(22) Date of filing: 31.01.2024
(51) Int. Cl.: B60H 1/00, B60H 1/32

(54) **THERMAL MANAGEMENT SYSTEM FOR A VEHICLE**

(30) Priority: 31.01.2023 CN 202310108347
(71) Applicant: Nio Technology (Anhui) Co., Ltd, Hefei City, Anhui 230601 (CN)
(72) Inventor: ZHANG, Ziqi, AnTing Town, Jiading Shanghai (CN); JIANG, Limin, AnTing Town, Jiading Shanghai (CN); LI, Guangming, AnTing Town, Jiading Shanghai (CN); CHEN, Jinfeng, AnTing Town, Jiading Shanghai (CN)
(74) Representative: Vossius & Partner Patentanwälte Rechtsanwälte mbB

(57) **Abstract**

A vehicle and a thermal management system of a vehicle, the thermal management system comprising: an air conditioning system, comprising a compressor (101), an air handler assembly, and a heat exchanger (103),the air handler assembly comprising a condenser (1021) and an evaporator (1022); and at least one component (battery cooler 106) to be subjected to heat exchange; wherein the thermal management system further comprises a valve assembly, the valve assembly enabling at least some of the compressor, the air handler assembly, the heat exchanger, and the component to be subjected to heat exchange to form at least one refrigerant circuit; wherein the valve assembly comprises: a first throttle valve (203) arranged on an inlet side of the evaporator; and a second throttle valve (204) arranged on an outlet side of the evaporator.

## Description

### Technical Field

The disclosure relates to the technical field of vehicle thermal management, and in particular to a vehicle and a thermal management system thereof, a method for controlling a thermal management system of a vehicle, a computer-readable storage medium, and a computer device.

### Background Art

An air conditioning system of a vehicle is mainly used for thermal management of vehicle functional components (e.g., a traction battery and a motor controller), a cabin space, and auxiliary functional devices such as an on-board refrigerator arranged in the vehicle. Taking an example in which thermal management micropores cool air in the cabin space, a refrigerant circularly flows in a circuit formed of a compressor - a condenser - a throttling component - an evaporator (capable of exchanging heat with the air delivered to the cabin space)- the compressor, and cold may be delivered to the surface of the evaporator along with phase change of the refrigerator. In this way, the air to be delivered into the cabin space is cooled down by exchanging heat with the surface of the evaporator as it flows over the surface of the evaporator.

Electric vehicles (or hybrid vehicles with electric power supply) have been developed significantly in recent years due to their advantage of clean energy. As the traction battery serves the main power source of the electric vehicle, in addition to the heating/cooling demand of the traction battery, an electric vehicle has a heat generating component such as the motor controller, which needs heat dissipation. Since the maximum amount of power that can be carried by the traction battery is relatively fixed, thermal management for the air conditioning system, the traction battery, and the heat generating component from the viewpoint of the entire vehicle can at least partially solve the problem of energy waste. On this basis, it is hoped that the range of the electric vehicle can be increased at least to some extent; even if the cold/heat demand of the cabin space is low, it is possible to avoid switching between start and stop of the compressor of the air conditioning system due to improper distribution of the cold/heat throughout the vehicle; or it is possible to provide necessary heating for components such as the evaporator.

Therefore, there is a need for a novel technical solution to solve the technical problem described above.

### Summary

The disclosure is intended to solve, at least in part, the above technical problem, specifically, how to carry out integrated management of energy from the perspective of the entire vehicle, so as to improve the integrated energy utilization efficiency of the vehicle, and extend the range of the electric vehicle.

In a first aspect, the disclosure provides a thermal management system of a vehicle, the thermal management system comprising: an air conditioning system, comprising a compressor, an air handler assembly, and a heat exchanger, the air handler assembly comprising a condenser and an evaporator; and at least one component to be subjected to heat exchange; wherein the thermal management system further comprises a valve assembly, the valve assembly enabling at least some of the compressor, the air handler assembly, the heat exchanger, and the component to be subjected to heat exchange to form at least one refrigerant circuit; wherein the valve assembly comprises: a first throttle valve arranged on an inlet side of the evaporator; and a second throttle valve arranged on an outlet side of the evaporator.

With such a configuration, a possible structural form of the thermal management system is provided.

It can be understood that those skilled in the art can determine the specific way of forming the refrigerant circuits, functional components contained in the refrigerant circuits, and the number of refrigerant circuits according to actual requirements. Moreover, those skilled in the art can determine a refrigerant circuit capable of exchanging heat with the component to be subjected to heat exchange, the specific form/number/function of the component to be subjected to heat exchange, and the specific way in which the two implement the heat exchange, etc., according to the actual requirements.

Accordingly, those skilled in the art can determine the specific construction method of the refrigerant circuits and the type and number of valves included in the valve assembly adapted thereto and their arrangement positions, etc., according to actual requirements. For example, the valve assembly may include one or more throttle valves in addition to the first/second throttle valve, and in addition, the valve assembly may include, but not limited to, for example, check valves, stop valves, and regulating valves.

In addition, it can be understood that those skilled in the art can determine the specific form and number of components to be subjected to heat exchange that are involved in heat exchange according to the actual requirements, for example, one or more components within the scope of the entire vehicle that need heat dissipation may be used as the component to be subjected to heat exchange of the disclosure. Illustratively, the component to be subjected to heat exchange may include a traction battery, a motor controller, and other components related to driving functions and/or auxiliary functions.

For the thermal management system described above, in a possible embodiment, the component to be subjected to heat exchange is provided with at least one intermediate heat exchanger, and the valve assembly comprises: at least one third throttle valve arranged on an inlet side of the at least one intermediate heat exchanger corresponding thereto.

With such a configuration, a specific structural form of the valve assembly is provided.

Specifically, on the basis of providing the third throttle valve, it is possible to achieve better thermal management of the vehicle by recovering the cold/heat from the component to be subjected to heat exchange.

The intermediate heat exchanger is mainly used for heat exchange between the component to be subjected to heat exchange and the air conditioning system. Illustratively, the way to exchange heat is as follows: the component to be subjected to heat exchange is provided with a cooling system (e.g., cooling by a medium such as a coolant), and heat exchange between the coolant in the cooling system and the refrigerant in the refrigerant circuit can be realized via the intermediate heat exchanger.

For the thermal management system described above, in a possible embodiment, the valve assembly comprises: a fourth throttle valve arranged on a first side of the heat exchanger.

With such a configuration, a specific structural form of the valve assembly is provided.

Specifically, on the basis of providing the fourth throttle valve, it is possible to achieve better thermal management of the vehicle by throttling the refrigerant flowing to/from the first side of the heat exchanger.

For the thermal management system described above, in a possible embodiment, the valve assembly comprises: a first regulating valve disposed between an exhaust port of the compressor and a second side of the heat exchanger; and a second regulating valve disposed between the exhaust port of the compressor and an inlet side of the condenser.

With such a configuration, it is possible to obtain the desired thermal management effect by distributing the refrigerant between different pipelines via the regulating valves.

For the thermal management system described above, in a possible embodiment, the valve assembly comprises: a stop valve disposed between the second side of the heat exchanger and an air return port of the compressor.

With such a configuration, it is possible to create different refrigerant circulation circuits by opening/closing the stop valve.

For the thermal management system described above, in a possible embodiment, the thermal management system comprises a coaxial heat exchanger, and the stop valve is arranged between the second side of the heat exchanger and an inlet side of a low-pressure part of the coaxial heat exchanger.

With such a configuration, a specific configuration of the stop valve is provided.

For the thermal management system described above, in a possible embodiment, the valve assembly comprises: a first check valve arranged on the first side of the heat exchanger and allowing a refrigerant to flow out of the first side of the heat exchanger only; and/or a second check valve arranged on an outlet side of the condenser and allowing the refrigerant to flow out of the outlet side of the condenser only.

With such a configuration, it is possible to ensure the formation of reliable and stable refrigerant circuits.

For the thermal management system described above, in a possible embodiment, the air handler assembly comprises a heating component capable of directly heating air delivered to a cabin of the vehicle; and/or the air conditioning system comprises a gas-liquid separator arranged at the air return port of the compressor; and/or the air conditioning system comprises a liquid reservoir arranged on the outlet side of the condenser.

With such a configuration, a possible way of forming the air conditioning system is provided. For example, the heating component may be a PTC or a heater core.

For the thermal management system described above, in a possible embodiment, the at least one refrigerant circuit includes: a refrigerant circuit formed of the compressor → a converging part → the first throttle valve → the evaporator → the second throttle valve → the compressor; and a refrigerant circuit formed of the compressor → a converging part → the at least one third throttle valve → the at least one intermediate heat exchanger corresponding to the at least one third throttle valve → the compressor; wherein the converging part refers to the part where the refrigerant converges after flowing through the first regulating valve and the heat exchanger, and the second regulating valve and the condenser, respectively, from the compressor.

With such a configuration, a possible form of the refrigerant circuit formed by the thermal management system is provided. Specifically, on the basis of this structure, with the second throttle valve having an opening degree of not less than a set value (e.g., not less than 95%, fully open, illustratively), the cold that cannot be absorbed by the evaporator can be apportioned through the component to be subjected to heat exchange, thereby avoiding shutdown of the compressor, and avoiding odors due to switching between start and stop of the compressor.

For the thermal management system described above, in a possible embodiment, the at least one refrigerant circuit includes: a refrigerant circuit formed of the compressor → a converging part → the first throttle valve → the evaporator → the second throttle valve → the compressor; wherein the converging part refers to the part where the refrigerant converges after flowing through the first regulating valve and the heat exchanger, and the second regulating valve and the condenser, respectively, from the compressor.

With such a configuration, a possible form of the refrigerant circuit formed by the thermal management system is provided. Specifically, in this case, density of the refrigerant in the refrigerant circuit can be reduced by further throttling the refrigerant flowing out of the evaporator, thus avoiding shutdown of the compressor, and effectively avoiding the problem of odors in the cabin space.

For the thermal management system described above, in a possible embodiment, the at least one refrigerant circuit includes: a refrigerant circuit formed of the compressor → the first regulating valve → the heat exchanger → the first throttle valve → the evaporator → the second throttle valve → the compressor; and a refrigerant circuit formed of the compressor → the first regulating valve → the heat exchanger → the at least one third throttle valve → the at least one intermediate heat exchanger corresponding to the at least one third throttle valve → the compressor.

With such a configuration, a possible form of the refrigerant circuit formed by the thermal management system is provided. Specifically, on the basis of this structure, with the first throttle valve having an opening degree of not less than a certain set level (e.g., not less than 95%, fully open, illustratively), it is possible that the refrigerant flowing through the evaporator is at least somewhat close to a high-temperature high-pressure refrigerant, so that the surface of the evaporator can be heated, and the problem of odors in the cabin space is accordingly suppressed or avoided.

For the thermal management system described above, in a possible embodiment, the at least one refrigerant circuit includes: a refrigerant circuit formed of the compressor → the first regulating valve → the heat exchanger → the first throttle valve → the evaporator → the second throttle valve → the compressor; and a refrigerant circuit formed of the compressor → the first regulating valve → the heat exchanger → the at least one third throttle valve → the at least one intermediate heat exchanger corresponding to the at least one third throttle valve → the compressor.

With such a configuration, a possible form of the refrigerant circuit formed by the thermal management system is provided. Specifically, in this case, it is possible to satisfy the refrigeration demand of the cabin space on the basis of allowing the cold of the component to be subjected to heat exchange.

For the thermal management system described above, in a possible embodiment, the compressor → the second regulating valve → the condenser → the fourth throttle valve → the heat exchanger → the stop valve → the compressor form a refrigerant circuit; and the compressor → the second regulating valve → the condenser → the at least one third throttle valve → the at least one intermediate heat exchanger corresponding to the at least one third throttle valve → the compressor form a refrigerant circuit.

With such a configuration, a possible form of the refrigerant circuit formed by the thermal management system is provided. Specifically, in this case, heat pump heating based on air source/waste heat recovery can be realized.

In a second aspect, the disclosure provides a vehicle, which comprises a thermal management system of a vehicle according to any one of the foregoing.

It can be understood that the vehicle has all technical effects of the thermal management system of a vehicle according to any one of the foregoing, which will not be repeated herein.

In a third aspect, the disclosure provides a method for controlling a thermal management system, the control method comprising: opening a first regulating valve, a second regulating valve, a first throttle valve, a second throttle valve and a third throttle valve, and closing a fourth throttle valve and a stop valve, such that cold generated by a refrigerant circuit is apportioned by at least one component to be subjected to heat exchange.

With such a configuration, a specific way to control the thermal management system is provided. Specifically, in the case of low cold demand, the cold is apportioned by the component to be subjected to heat exchange, thus preventing a compressor from switching between start and stop, and effectively avoiding the problem of odors in the cabin space.

In a fourth aspect, the disclosure provides a method for controlling a thermal management system, the control method comprising: opening a first regulating valve, a second regulating valve, a first throttle valve and a second throttle valve, and closing a third throttle valve, a fourth throttle valve and a stop valve, such that the refrigerant is further throttled by means of the second throttle valve, so as to reduce the refrigerant in the refrigerant circuit.

With such a configuration, a specific way to control the thermal management system is provided. Specifically, in the case of low cold demand, density of the refrigerant in the refrigerant circuit can be reduced by further throttling the refrigerant flowing out of the evaporator, thus preventing the compressor from switching between start and stop, and effectively avoiding the problem of odors in the cabin space.

In a fifth aspect, the disclosure provides a method for controlling a thermal management system, the control method comprising: opening a first regulating valve, a first throttle valve, a second throttle valve and a third throttle valve; and closing a second regulating valve, a fourth throttle valve and a stop valve; wherein the first throttle valve is opened with an opening degree not less than a set opening degree.

With such a configuration, a specific way to control the thermal management system is provided. Specifically, it is possible that the refrigerant flowing through the evaporator is at least somewhat close to a high-temperature high-pressure refrigerant, so that the surface of the evaporator can be heated, and the problem of odors in the cabin space is accordingly suppressed or avoided.

It can be understood that the set opening degree herein is a specific high value, such as a specific value greater than 90%. Illustratively, the first throttle valve is fully open.

In a sixth aspect, the disclosure provides a method for controlling a thermal management system, the control method comprising: opening a first regulating valve, a first throttle valve and a second throttle valve while allowing at least one third throttle valve to be opened, and closing a second regulating valve, a fourth throttle valve and a stop valve, such that the cabin space of the vehicle can obtain cold by means of the evaporator, and the at least one component to be subjected to heat exchange corresponding to at least one third throttle valve is cooled when the at least one third throttle valve is opened.

With such a configuration, a specific way to implement a mode of cabin refrigeration/cooling of the component to be subjected to heat exchange of the thermal management system is provided.

In a seventh aspect, the disclosure provides a method for controlling a thermal management system, the control method comprising: opening a second regulating valve, a fourth throttle valve, and a stop valve while allowing at least one third throttle valve to be opened, and closing a first regulating valve, and a first throttle valve, so as to release heat to the cabin space of the vehicle on the basis of recovering heat of at least one component to be subjected to heat exchange.

With such a configuration, a specific way to implement an air source/waste heat recovery heat pump heating mode of the thermal management system is provided.

In an eighth aspect, the disclosure provides a computer-readable storage medium, wherein the storage medium is adapted to store a plurality of program codes, and the program codes are adapted to be loaded and run by a processor to perform the method for controlling a thermal management system of a vehicle according to any one of the foregoing.

It can be understood that the computer-readable storage medium has all technical effects of the method for controlling a thermal management system of a vehicle according to any one of the foregoing. Details are not provided herein again.

Those skilled in the art can understand that in the disclosure, a computer program can instruct relevant hardware to implement some or all of procedures of the method for controlling a thermal management system of a vehicle. The computer program may be stored in one computer-readable storage medium. The computer program can implement steps of each method embodiment described above when executed by a processor. The computer program includes a computer program code. It is to be understood that the program code includes, but is not limited to, a program code for executing the method for controlling a thermal management system of a vehicle described above. For ease of description, only the parts related to the disclosure are shown. The computer program code may be in the form of source code, object code, executable file, or some intermediate forms. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, and a software distribution medium. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not comprise an electric carrier signal and a telecommunications signal.

In a ninth aspect, the disclosure provides a computer device, including a memory and a processor, wherein the memory is adapted to store a plurality of program codes, and the program codes are adapted to be loaded and run by the processor to perform the method for controlling a thermal management system of a vehicle according to any one of the foregoing.

It can be understood that the computer device has all technical effects of the method for controlling a thermal management system of a vehicle according to any one of the foregoing aspects. Details are not provided herein again. The computer device may be a computer device including various electronic devices.

Proposal 1. A thermal management system of a vehicle, the thermal management system comprising:
an air conditioning system, comprising a compressor, an air handler assembly, and a heat exchanger, the air handler assembly comprising a condenser and an evaporator; and
at least one component to be subjected to heat exchange;
wherein the thermal management system further comprises a valve assembly, the valve assembly enabling at least some of the compressor, the air handler assembly, the heat exchanger, and the component to be subjected to heat exchange to form at least one refrigerant circuit;
wherein the valve assembly comprises:
   a first throttle valve arranged on an inlet side of an evaporator; and
   a second throttle valve arranged on an outlet side of the evaporator.

Proposal 2. The thermal management system according to proposal 1, wherein the component to be subjected to heat exchange is provided with an intermediate heat exchanger, and the valve assembly comprises:
at least one third throttle valve arranged on an inlet side of the intermediate heat exchanger.

Proposal 3. The thermal management system according to proposal 2, wherein the valve assembly comprises:
a fourth throttle valve arranged on a first side of the heat exchanger.

Proposal 4. The thermal management system according to proposal 3, wherein the valve assembly comprises:
a first regulating valve disposed between an exhaust port of the compressor and a second side of the heat exchanger; and
a second regulating valve disposed between the exhaust port of the compressor and an inlet side of the condenser.

Proposal 5. The thermal management system according to proposal 4, wherein the valve assembly comprises:
a stop valve disposed between the second side of the heat exchanger and an air return port of the compressor.

Proposal 6. The thermal management system according to proposal 5, wherein the thermal management system comprises a coaxial heat exchanger, and
the stop valve is arranged between the second side of the heat exchanger and an inlet side of a low-pressure part of the coaxial heat exchanger.

Proposal 7. The thermal management system according to proposal 1, wherein the valve assembly comprises:
a first check valve arranged on the first side of the heat exchanger and allowing a refrigerant to flow out of the first side of the heat exchanger only; and/or
a second check valve arranged on an outlet side of the condenser and allowing the refrigerant to flow out of the outlet side of the condenser only.

Proposal 8. The thermal management system according to proposal 1, wherein the air handler assembly comprises a heating component capable of directly heating air delivered into a cabin of the vehicle; and/or
the air conditioning system comprises a gas-liquid separator arranged at the air return port of the compressor; and/or
the air conditioning system comprises a liquid reservoir arranged on the outlet side of the condenser.

Proposal 9. The thermal management system according to proposal 5 or 6, wherein the at least one refrigerant circuit comprises:
a refrigerant circuit formed of the compressor → a converging part → the first throttle valve → the evaporator → the second throttle valve → the compressor; and
a refrigerant circuit formed of the compressor → a converging part → the at least one third throttle valve → the intermediate heat exchanger corresponding to the at least one third throttle valve → the compressor;
wherein the converging part refers to
the part where the refrigerant converges after flowing through the first regulating valve and the heat exchanger, and the second regulating valve and the condenser, respectively, from the compressor.

Proposal 10. The thermal management system according to proposal 5 or 6, wherein the at least one refrigerant circuit comprises:
a refrigerant circuit formed of the compressor → a converging part → the first throttle valve → the evaporator → the second throttle valve → the compressor;
wherein the converging part refers to
the part where the refrigerant converges after flowing through the first regulating valve and the heat exchanger, and the second regulating valve and the condenser, respectively, from the compressor.

Proposal 11. The thermal management system according to proposal 5 or 6, wherein the at least one refrigerant circuit comprises:
a refrigerant circuit formed of the compressor → the first regulating valve → the heat exchanger → the first throttle valve → the evaporator → the second throttle valve → the compressor; and
a refrigerant circuit formed of the compressor → the first regulating valve → the heat exchanger → the at least one third throttle valve → the intermediate heat exchanger corresponding to the at least one third throttle valve → the compressor.

Proposal 12. The thermal management system according to proposal 5 or 6, wherein the at least one refrigerant circuit comprises:
a refrigerant circuit formed of the compressor → the first regulating valve → the heat exchanger → the first throttle valve → the evaporator → the second throttle valve → the compressor; and
a refrigerant circuit formed of the compressor → the first regulating valve → the heat exchanger → the at least one third throttle valve → the intermediate heat exchanger corresponding to the at least one third throttle valve → the compressor.

Proposal 13. The thermal management system according to proposal 5 or 6, wherein the at least one refrigerant circuit comprises:
a refrigerant circuit formed of the compressor → the second regulating valve → the condenser → the fourth throttle valve → the heat exchanger → the stop valve → the compressor; and
a refrigerant circuit formed of the compressor → the second regulating valve → the condenser → the at least one third throttle valve → the intermediate heat exchanger corresponding to the at least one third throttle valve → the compressor;

Proposal 14. A vehicle, comprising a thermal management system of a vehicle according to any one of proposals 1 to 13.

Proposal 15. A method for controlling a thermal management system according to any one of proposals 5 to 6 and 9, wherein the control method comprises:
opening the first regulating valve, the second regulating valve, the first throttle valve, the second throttle valve and the third throttle valve; and
closing the fourth throttle valve and the stop valve, such that
cold generated by a refrigerant circuit is apportioned by the at least one component to be subjected to heat exchange.

Proposal 16. A method for controlling a thermal management system according to any one of proposals 5 to 6 and 10, wherein the control method comprises:
opening the first regulating valve, the second regulating valve, the first throttle valve and the second throttle valve; and
closing the third throttle valve, the fourth throttle valve and the stop valve, such that
the refrigerant is further throttled by means of the second throttle valve, so as to reduce the refrigerant in the refrigerant circuit.

Proposal 17. A method for controlling a thermal management system according to any one of proposals 5 to 6 and 11, wherein the control method comprises:
opening the first regulating valve, the first throttle valve, the second throttle valve and the third throttle valve; and
closing the second regulating valve, the fourth throttle valve and the stop valve;
wherein the first throttle valve is opened with an opening degree not less than a set opening degree.

Proposal 18. The method for controlling a thermal management system according to any one of proposals 5 to 6 and 12, wherein the control method comprises:
opening the first regulating valve, the first throttle valve and the second throttle valve, and allowing the at least one third throttle valve to be opened, and
closing the second regulating valve, the fourth throttle valve and the stop valve, such that
the cabin space of the vehicle can obtain cold by means of the evaporator, and
the at least one component to be subjected to heat exchange corresponding to the at least one third throttle valve is cooled when the at least one third throttle valve is opened.

Proposal 19. The method for controlling a thermal management system according to any one of proposals 5 to 6 and 13, wherein the control method comprises:
opening the second regulating valve, the fourth throttle valve and the stop valve while allowing the at least one third throttle valve to be opened, and
closing the first regulating valve and the first throttle valve, so as to
release heat to the cabin space of the vehicle on the basis of recovering heat of at least one component to be subjected to heat exchange.

Proposal 20. A computer-readable storage medium, wherein the storage medium is adapted to store a plurality of program codes, and the program codes are adapted to be loaded and run by a processor to perform the method for controlling a thermal management system of a vehicle according to any one of proposals 15 to 19.

Proposal 21. A computer device, comprising a memory and a processor, wherein the memory is adapted to store a plurality of program codes, and the program codes are adapted to be loaded and run by the processor to perform the method for controlling a thermal management system of a vehicle according to any one of proposals 15 to 19.

### Brief Description of the Drawings

Preferred embodiments of the disclosure are described below taking an example in which a traction battery is used as a component to be subjected to heat exchange, with reference to the accompanying drawings. In the drawings:
FIG. 1 shows a schematic principle diagram of a thermal management system of a vehicle according to an embodiment of the disclosure;
FIG. 2 shows a schematic principle diagram of a thermal management system of a vehicle, in a first form of evaporator water-film retention mode, according to an embodiment of the disclosure;
FIG. 3 shows a schematic principle diagram of a thermal management system of a vehicle, in a second form of evaporator water-film retention mode, according to an embodiment of the disclosure;
FIG. 4 shows a schematic principle diagram of a thermal management system of a vehicle, in a mode of heating an evaporator, according to an embodiment of the disclosure;
FIG. 5 shows a schematic principle diagram of a thermal management system of a vehicle, in a cabin refrigerating or battery cooling mode, according to an embodiment of the disclosure;
FIG. 6 shows a schematic principle diagram of a thermal management system of a vehicle, in an air source heat pump heating or waste heat recovery heat pump heating mode, according to an embodiment of the disclosure; and
FIG. 7 shows a schematic flowchart of a method for controlling a thermal management system of a vehicle according to an embodiment of the disclosure.

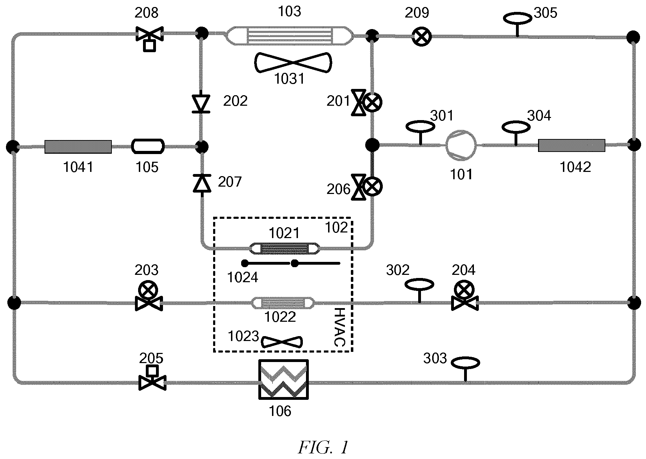

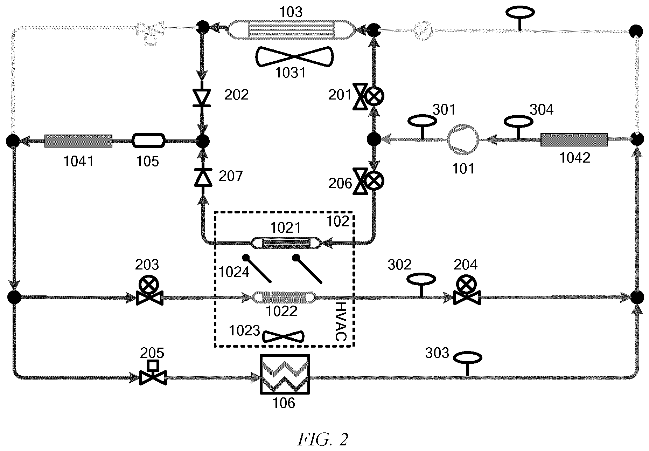

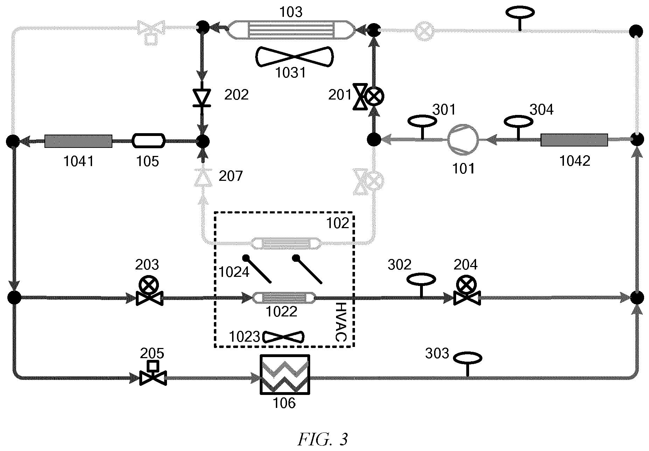

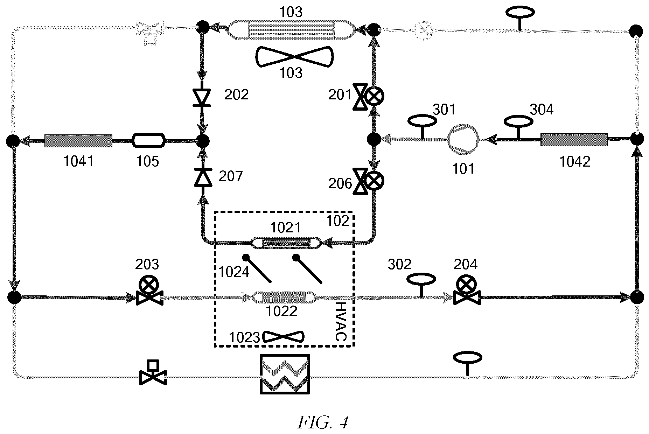

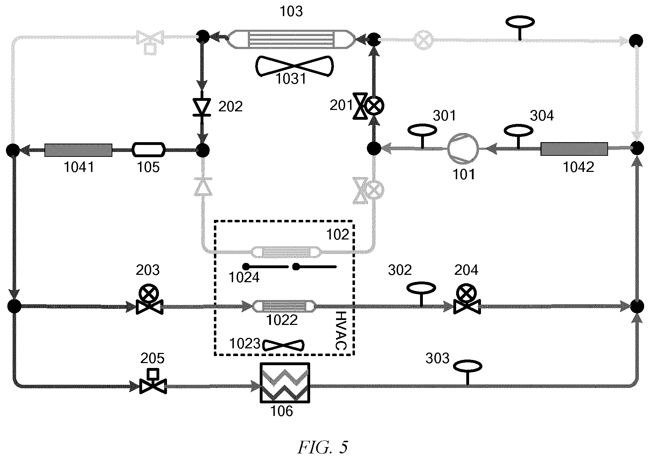

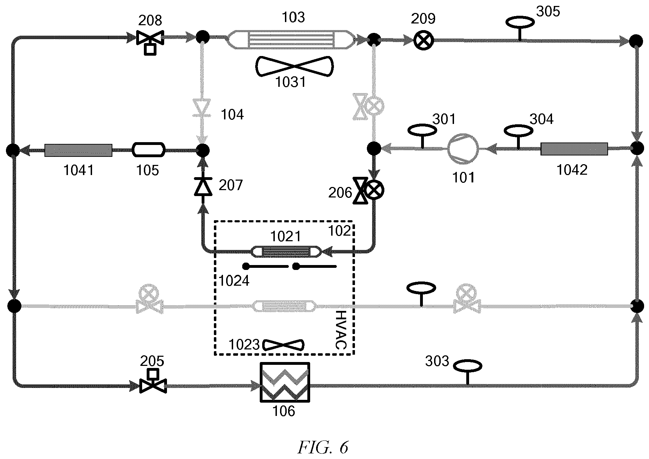

Note: In order to facilitate a better illustrated description and understanding of the solution, components of refrigerant circuits that are not involved in the corresponding modes are simplified in FIGS. 2 to 6 compared to the illustration of FIG. 1 that includes all the components (e.g., an evaporator and valves).

### List of reference signs:

101. compressor;
102. air handler assembly;
1021. condenser; 1022. evaporator; 1023. blower; 1024. temperature damper;
103. heat exchanger; 1031. fan;
1041. high-pressure part; 1042. low-pressure part;
105. liquid reservoir;
106. battery cooler;
201. first regulating valve (refrigeration regulating valve at an exhaust port of the compressor);
206. second regulating valve (heating regulating valve at the exhaust port of the compressor);
202. first check valve (refrigeration check valve);
207. second check valve (heating check valve);
203. first throttle valve (throttle valve at an inlet of the evaporator);
204. second throttle valve (throttle valve at an outlet of the evaporator);
205. third throttle valve (throttle valve at the battery cooler);
208. fourth throttle valve (throttle valve at the heat exchanger);
209. stop valve;
301. first temperature and pressure sensor;
302. second temperature and pressure sensor;
303. third temperature and pressure sensor;
304. fourth temperature and pressure sensor;
305. fifth temperature and pressure sensor.

### Detailed Description of Embodiments

Preferred embodiments of the disclosure are described below with reference to the accompanying drawings. Those skilled in the art should understand that these embodiments are only used to explain the technical principles of the disclosure, and are not intended to limit the scope of protection of the disclosure. For example, although these embodiments are described with a traction battery as a component to be cooled, it is not intended to limit the scope of protection of the disclosure. Without departing from the principles of the disclosure, those skilled in the art can replace the traction battery with or add to it a motor drive system, other electrically-controlled elements in the vehicle that needs heat dissipation, and the like.

It should be noted that in the description of the disclosure, the terms "first" and "second" are merely used for descriptive purposes and cannot be understood as indicating or implying relative importance. In addition, it should also be noted that, in the description of the disclosure, the terms "mount", "provide" and "connect" should be interpreted in a broad sense unless explicitly defined and limited otherwise, which, for example, may mean a fixed connection, a detachable connection or an integral connection; and may be a direct connection, an indirect connection by means of an intermediary, or internal communication between two elements. For those skilled in the art, the specific meanings of the foregoing terms in the disclosure can be interpreted according to a specific situation.

In addition, for better description of the disclosure, many details are provided in the following specific embodiments, and those skilled in the art should understand that, without some specific details, the disclosure can still be implemented. In some instances, the refrigeration/heating principles and the like of the air conditioning system well known to those skilled in the art are not described in detail in order to highlight the gist of the disclosure.

Referring primarily to FIG. 1, a thermal management system (vehicle thermal management system) of a vehicle of the disclosure mainly includes an air conditioning system and a battery cooler 106 of a traction battery cooling system. The battery cooler can implement an intermediate heat exchanger for heat exchange between a refrigerant (of the air conditioning system) and a coolant (of the traction battery cooling system). The air conditioning system mainly includes a compressor 101, an air handler assembly 102, and a heat exchanger 103 (an external heat exchanger). The air handler assembly includes an air handler. The heat exchanger is disposed on the outer side of the air handler. A condenser 1021 and an evaporator 1022 are disposed on the inner side of the air handler. Where the compressor → the condenser → the heat exchanger → the compressor form a refrigerant circuit (denoted as a first refrigerant circuit), heat can be delivered to the cabin space through heat exchange between the condenser and the air in the cabin space, thereby satisfying the heating demand of the cabin. Where the compressor → the heat exchanger → the evaporator → the compressor form a refrigerant circuit (denoted as a second refrigerant circuit), heat exchange between the evaporator and the air in the cabin space can be carried out to deliver cold to the cabin space, thereby satisfying the refrigeration demand of the cabin.

In a possible embodiment, the air handler assembly 102 further includes a blower 1023 and a temperature damper 1024. By means of the blower, air from the external environment is directed to flow through the evaporator or the condenser, while the temperature damper is mainly used to regulate the flow rate of the air flowing through the condenser and thus to regulate the temperature of air delivered to the cabin space from the air handler.

In a possible embodiment, the air conditioning system further includes a coaxial heat exchanger which includes a high-pressure part 1041 and a low-pressure part 1042 between which heat exchange can be carried out. By heat exchange between the two, the refrigerant flowing from the condenser or the heat exchanger (where the heat exchanger and the evaporator form the second refrigerant circuit) can be further cooled, while the refrigerant flowing through the low-pressure part can be heated, thereby optimizing the heat exchange quality of the refrigerant circuit.

In a possible embodiment, the air conditioning system further includes a liquid reservoir 105, and a gas-liquid separator is disposed between a first side of the heat exchanger/outlet side of the condenser and an inlet side of the evaporator/inlet side of the battery cooler.

The heat exchanger 103 is provided with a fan 1031. The fan is mainly used to direct the air from the external environment to flow over the surface of the heat exchanger and to achieve heat exchange with the surface of the heat exchanger before the air flows to the external environment.

In the disclosure, the thermal management system further includes a valve assembly. The valve assembly is used to implement different operational modes of the thermal management system by cooperating with the functional components of the thermal management system described above. In a possible embodiment, the valve assembly mainly includes:
1) a first regulating valve 201 disposed between an exhaust port of the compressor 101 and the second side of the heat exchanger 103, and a second regulating valve 206 disposed between the exhaust port of the compressor 101 and an inlet side of the condenser 1021, where through the cooperation between the refrigeration regulating valve at the exhaust port of the compressor and the heating regulating valve at the exhaust port of the compressor, the flow rate of the refrigerant passing through the heat exchanger 103 and the condenser 1021 can be dynamically regulated, thus achieving the purpose of energy distribution;
2) a first check valve 202 arranged on a first side of the heat exchanger 103 and allowing the refrigerant to flow out of that side only, and a second check valve 207 arranged on an outlet side of the condenser 1021 and allowing the refrigerant to flow out of that side only, where through the cooperation between the first check valve and the second check valve, it is possible to ensure that the refrigerant flowing out of (the first side of) the heat exchanger 103 and the condenser 1021 flows into the liquid reservoir 105 in a single direction;
3) a first throttle valve 203, which is arranged on an inlet side of the evaporator and is mainly responsible for regulating the flow rate of the refrigerant flowing through the evaporator 1022, thus achieving all pass or throttling;
4) a second throttle valve 204, which is arranged on an outlet side of the evaporator and is mainly responsible for regulating pressure on the outlet side of the evaporator;
5) a third throttle valve 205, which is arranged on a first side of the battery cooler 106, specifically, between the outlet side of the condenser 1021/first side of the heat exchanger 103 and the first side of the battery cooler so as to provide a throttling function, i.e., to regulate the flow rate of the refrigerant in a pipeline corresponding to the battery cooler, when the battery cooler is involved in the formation of a refrigerant circuit;
6) a fourth throttle valve 208, which is arranged on the first side of the heat exchanger and is mainly responsible for regulating the flow rate of the heat exchanger 103; and
7) a stop valve 209, which is arranged between the exhaust port of the compressor 101/the second side of the heat exchanger 103 and an air return port of the compressor so as to create different refrigerant circulation circuits by opening/closing the stop valve, for example, in an embodiment, the stop valve is opened in an air source or waste heat recovery heat pump heating mode, and accordingly it may also be referred to as a heating stop valve.

In a possible embodiment, the thermal management system further includes a sensor assembly. The sensor assembly mainly includes a first temperature and pressure sensor 301 arranged at the exhaust port of the compressor 101, a second temperature and pressure sensor 302 arranged on the outlet side of the evaporator, a third temperature and pressure sensor 303 arranged on an outlet side of the battery cooler, a fourth temperature and pressure sensor 304 arranged at the air return port of the compressor, and a third temperature and pressure sensor 305 arranged on the second side of the heat exchanger 103 (in a mode related to the detected value of the fifth temperature and pressure sensor, the second side being the outlet side). The sensor assembly is mainly used to detect temperature/pressure parameters of the refrigerant at the position where it arranged. In this way, the thermal management system can be switched to a different mode adapted to the currently detected parameter, depending on the actual demand or the temperature/pressure parameters detected by the sensor assembly at the corresponding position. For example, the thermal management system may be switched to any one of at least some of the following modes adapted to the currently detected parameters:
1) first evaporator water-film retention mode (denoted as Mode I);
2) second evaporator water-film retention mode (denoted as Mode II);
3) evaporator heating mode (denoted as Mode III);
4) cabin refrigeration (including heating)/battery cooling mode (denoted as Mode IV); and
5) air source/waste heat recovery heat pump heating mode (denoted as Mode V).

Taking an electric vehicle as an example, the air conditioning system is usually one of essential components of the electric vehicle. At present, odors caused by air conditioning are prevalent in the cabin space of the electric vehicle. The causes of odors include two main aspects.

The first aspect refers to the odors caused by microorganisms adhered to the surface of the evaporator. Specifically, since the evaporator is in working condition for a long time in summer, the surface of the evaporator constantly precipitates condensate, and is thus always in a humid or wet state. Moreover, microorganisms such as bacteria in the external environment are very likely to be adhered to the surface of the evaporator with flowing of air. In this way, after the evaporator stops working, there is no cold from the refrigerant circuit and the external temperature is high, the temperature of the surface of the evaporator will thus rapidly rise to be close to the environment temperature (e.g., usually 20°C or more), then the temperature is suitable for biochemical activities of microorganisms, for example, reproduction, metabolism, decomposition of organic matter on the surface of the evaporator and other activities of microorganisms will be carried out on the surface of the evaporator, resulting in generation of odors similar to putrid odors on the surface of the evaporator. In view of the odor generating mechanism in this situation, how to inhibit the growth of microorganisms on the surface of the evaporator is particularly important.

The second aspect refers to the odors caused by the fact that the surface of the evaporator and the structures including the air conditioner housing and the heat exchanger inherently have certain odors. Specifically, odor-forming molecules may be divided into hydrophilic and hydrophobic molecules according to their hydrophilicity. The compressor of the air conditioning system may switch between start and stop and has changes in operating parameters due to the refrigeration and heating demands of the cabin space. Such switching and changes often cause the condensate on the surface of the evaporator to alternate between different degrees of generation and different degrees of evaporation. When the surface of the evaporator changes from a dry state to a wet state, the hydrophobic molecules adhered to the surface of the evaporator are pushed away from the surface of the evaporator by water molecules, which may cause a certain degree of odor perception. Conversely, when the surface of the evaporator changes from a wet state to a dry state, the hydrophilic molecules originally adhered on the surface of the evaporator by the water molecules may fly out, which may also cause a certain degree of odor perception. In view of the odor generating mechanism in this situation, retaining the water film on the surface of the evaporator becomes the key to suppress the odors.

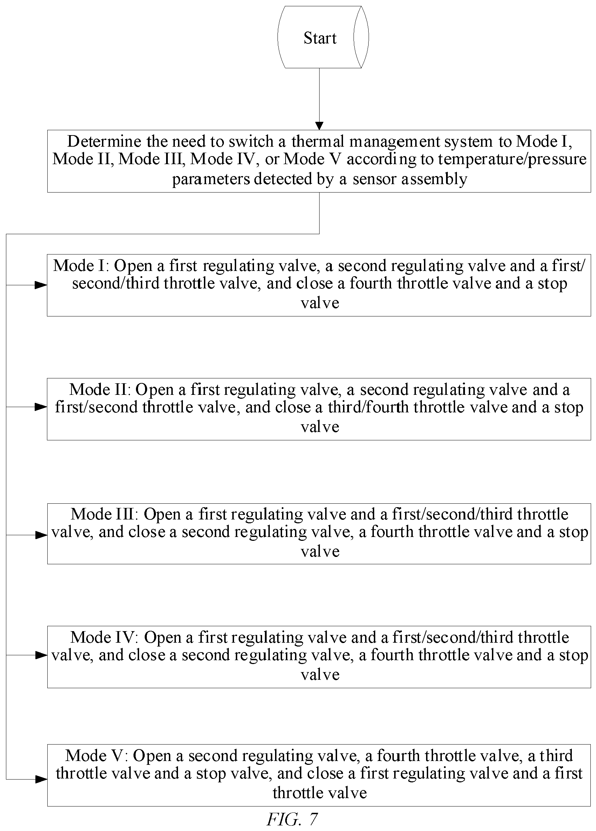

Referring primarily to FIGS. 1, 2, and 7, in a possible embodiment, in the case of the low cold demand of the cabin space, if the compressor runs continuously, even if it provides only the minimum cold, the cold is usually greater than the demand level of the cabin space, and then, if no special treatment is taken, the compressor will go into the state of switching between start and stop, which will cause generation of odors. Therefore, this model focuses on solving the problem of excessive flow of the refrigerant in the evaporator and refrigeration performance greater than the demand of the passenger compartment. Specifically, the problem is how to regulate the thermal management system for the scenario of the first aspect above (where the battery cooler can absorb the cold).

In this mode (Mode I above), in the method for controlling the thermal management system, the controller causes some valves (201, 206, 203, 204, 205) to open and some valves (208, 209) to close. Specifically, the first regulating valve 201 and the second regulating valve 206 are regulated according to the energy demand of the cabin space. Illustratively, when the cold demand of the cabin space increases, the first regulating valve is opened to a larger degree and the second regulating valve is closed to a smaller degree. When the heat required for the passenger compartment increases, the first regulating valve is closed to a smaller degree and the second regulating valve is opened to a larger degree. The opening degree of the first throttle valve 203 is regulated according to the refrigeration demand of the cabin space. The second throttle valve 204 is fully open, so that the pipeline corresponding to the second throttle valve is equivalent to a through pipeline. The third throttle valve 205 is mainly responsible for assisting in regulating (i.e. apportioning) the flow rate of the refrigerant flowing through the evaporator, so that the flow rate of the evaporator can be further reduced.

On the basis of the control above, the refrigerant in the thermal management system has a flow direction as below.

A high-temperature high-pressure refrigerant generated by the compressor 101 flows through the first regulating valve 201 and the second regulating valve 206 to reach the heat exchanger 103 (releasing heat to the outside environment) and the condenser 1021 (uniformly heating up the air to be delivered to the cabin space after it is cooled by the evaporator) respectively, then the refrigerant converges and flows through the liquid reservoir 103 to reach the high-pressure part 1041 of the coaxial heat exchanger, enters the evaporator and the battery cooler 106 through the first throttle valve 203 and the third throttle valve 205 respectively, and then the refrigerant converges again and returns to the compressor 101 through the low-pressure part 1042 of the coaxial heat exchanger. The thermal management system of the vehicle may also be associated with a cooling system similar to the traction battery cooling system, such as a cooling system for the motor drive system or other electrically-controlled elements in the vehicle that need heat dissipation. For example, these cooling systems may be provided with coordinate structures parallel to the traction battery cooling system (e.g., the cooling systems may be provided with structures corresponding to the battery cooler/battery cooler throttle valves), so as to better apportion the cold that cannot be absorbed by the evaporator.

The blower 1023 is responsible for providing air flow through the evaporator, the temperature damper 1024 can be adjusted according to the outlet air temperature requirements of the cabin space. For example, the air is allowed to pass through the evaporator only or through the evaporator and then through the condenser. The fan 1031 is mainly used to provide the heat exchanger 103 with the air flow required for heat exchange with the external.

Referring primarily to FIGS. 1, 3, and 7, in a possible embodiment, in the case of the low cold demand of the cabin space, if the compressor runs continuously, even if it provides only the minimum cold, the cold is usually greater than the demand level of the cabin space, and then, if no special treatment is taken, the compressor will go into the state of switching between start and stop, which will cause generation of odors. Therefore, this model focuses on solving the problem of excessive flow of the refrigerant in the evaporator and refrigeration performance greater than the demand of the passenger compartment. If the traction battery cannot accept more cold due to the temperature thereof, the third throttle valve 205 needs to be closed, thus losing the auxiliary regulation function. In this case, another way to regulate the flow rate of the refrigerant in the evaporator is required. Specifically, the problem is how to regulate the thermal management system for the scenario of the first aspect above (where the battery cooler cannot absorb the cold).

In this mode (Mode II above), in the method for controlling the thermal management system, the controller causes some valves (201, 206, 203, 204) to open and some valves (205, 208, 209) to close. Specifically, the first regulating valve 201 and the second regulating valve 206 are regulated according to the energy demand of the cabin space. Illustratively, when the cold demand of the cabin space increases, the first regulating valve is opened to a larger degree and the second regulating valve is closed to a smaller degree. When the heat required for the passenger compartment increases, the first regulating valve is closed to a smaller degree and the second regulating valve is opened to a larger degree. The first throttle valve 203 is regulated according to the refrigeration demand of the cabin space. The second throttle valve 204 can further throttle the refrigerant so that the density of the refrigerant entering the compressor 101 is further reduced, thus reducing the flow rate of the refrigerant in the system and reducing the cold load of the evaporator.

On the basis of the control above, the refrigerant in the thermal management system has a flow direction as below.

The high-temperature high-pressure refrigerant generated by the compressor 101 flows through the first regulating valve 201 and the second regulating valve 206 to reach the heat exchanger 103 (releasing heat to the external environment) and the condenser 1021 (uniformly heating up the air that to be delivered to the cabin space after it is cooled by the evaporator) respectively, then the refrigerant converges and flows through the liquid reservoir 103 to reach the high-pressure part 1041 of the coaxial heat exchanger, and then enters the evaporator through the first throttle valve 203, and the refrigerant flowing out of the evaporator is throttled again by the second throttle valve 204, and then returns to the compressor 101 through the low-pressure part 1042 of the coaxial heat exchanger.

The blower 1023 is responsible for providing air flow through the evaporator, the temperature damper 1024 can be adjusted according to the outlet air temperature requirements of the cabin space. For example, the air cooled after passing through the evaporator is heated again by means of the condenser to achieve a comfortable temperature. The cooling fan 1031 is mainly used to provide the air flow required for the heat exchanger 103 to exchange heat with the outside.

Referring primarily to FIGS. 1, 4 and 7, in the method for controlling the thermal management system in this mode (Mode III above), the controller causes some valves (201, 203, 204, 205) to open and some valves (206, 208) to close. Specifically, the first regulating valve 201 is fully open, the first throttle valve 203 is fully open, the second throttle valve 204 is controlled in accordance with the degree of overheating fed back by the fourth temperature and pressure sensor 304 arranged on an inlet side of the compressor 101, and the third throttle valve 205 is adjusted in accordance with the degree of overheating fed back by the third temperature and pressure sensor 303 arranged on an outlet side of the battery cooler 106.

On the basis of the control above, the refrigerant in the thermal management system has a flow direction as below.

The high-temperature high-pressure refrigerant generated by the compressor 101 reaches the heat exchanger 103 through the first regulating valve 201 (the pipeline corresponding to the first regulating valve is equivalent to a through pipeline), and flows through the liquid reservoir 103 and the high-pressure part 1041 of the coaxial heat exchanger sequentially after releasing heat to the external environment, and then is divided into two branches as below.

A first branch enters the evaporator 1022 through the first throttle valve 203 (the pipeline corresponding to the first throttle valve is equivalent to a through pipeline), flows out of the evaporator and then flows through the second throttle valve 204.

A second branch enters the battery cooler 106 through the third throttle valve 205.

The refrigerant flowing from the two branches returns to the compressor 101 through the low-pressure part 1042 of the coaxial heat exchanger.

As can be seen, in this mode, there is no refrigerant flow inside the condenser 1021, that is, in this mode, the condenser does not involve in the formation of the refrigerant circuit, the first throttle valve 203 has no throttling effect because it is fully open, and accordingly the refrigerant entering the evaporator is still at a high temperature and a high pressure. Therefore, the surface of the evaporator can be heated to inhibit the growth of microorganisms or provide a sterilizing function. The refrigerant flowing out of the evaporator is throttled by the second throttle valve 204 to become a low-temperature low-pressure refrigerant.

Referring primarily to FIGS. 1, 5 and 7, in the method for controlling the thermal management system in this mode (Mode IV above), the controller causes some valves (201, 203, 204, 205) to open and some valves (206, 208, 209) to close. Specifically, the first regulating valve 201 is open fully, the opening degree of the first throttle valve 203 is regulated according to the refrigeration demand of the cabin space, the second throttle valve 204 is open fully (the pipeline corresponding to the second throttle valve is equivalent to a through pipeline), and the opening degree of the third throttle valve 205 is regulated according to the refrigeration demand of the traction battery.

On the basis of the control above, the refrigerant in the thermal management system has a flow direction as below.

The high-temperature high-pressure refrigerant generated by the compressor 101 flows through the first regulating valve 201 to reach the heat exchanger 103, releases heat to the external environment and then flows through the liquid reservoir 105. The refrigerant is then divided into two branches after passing through the high-pressure part 1041 of the coaxial heat exchanger.

A first branch enters the evaporator 1022 through the first throttle valve 203, flows out of the evaporator and then flows through the second throttle valve 204 (the pipeline corresponding to the second throttle valve is equivalent to a through pipeline).

A second branch enters the evaporator 1022 through the third throttle valve 203, flows out of the evaporator and then enters the battery cooler 106 through the third throttle valve 205.

The refrigerant flowing from the two branches returns to the compressor 101 through the low-pressure part 1042 of the coaxial heat exchanger.

As can be seen, in this mode, the condenser 1021 does not involve in the formation of the refrigerant circuit because the second regulating valve is fully closed. The refrigerant flowing out of the outlet side of the evaporator is not further throttled because the second throttle valve 204 is fully open. The temperature damper 1024 is fully cooled (the temperature damper is closed and air passes through the evaporator only). In this case, heat exchange between the air and the surface of the evaporator can be carried out to meet the refrigeration demand of the cabin space, while the traction battery can be cooled accordingly when the traction battery needs to be cooled.

Referring primarily to FIGS. 1, 6 and 7, in the method for controlling the thermal management system in this mode (Mode V above), the controller causes some valves (204, 205, 206, 208, 209) to open and some valves (201, 203) to close. Specifically, the second regulating valve 206 is fully open, the opening degree of the fourth throttle valve 208 is regulated according to, the second throttle valve 204 is fully open, and the opening degree of the third throttle valve 205 is regulated according to the demand for waste heat recovery.

On the basis of the control above, the refrigerant in the thermal management system has a flow direction as below.

The high-temperature high-pressure refrigerant generated by the compressor 101 reaches the condenser 1021 through the second regulating valve 206, thus can release heat to the cabin space to satisfy the heating demand, and then flows through the liquid reservoir 105 after heat release. The refrigerant is divided into two branches after passing through the high-pressure part 1041 of the coaxial heat exchanger.

A first branch enters the heat exchanger 103 through the fourth throttle valve 208 and flows through the stop valve 209 after flowing out of the heat exchanger.

A second branch enters the battery cooler 106 through the third throttle valve 205.

The refrigerant from the two branches converges and then returns to the compressor 101 through the low-pressure part 1042 of the coaxial heat exchanger.

As can be seen, in this mode, the evaporator 1022 does not involve in the formation of the refrigerant circuit because the first throttle valve is closed (and the second throttle valve is fully open). The heating demand of the cabin space can be satisfied by exchanging heat with the outside (by means of the heat exchanger) and recovering waste heat from the traction battery (by means of the battery cooler).

As can be seen, in the thermal management system of a vehicle of the disclosure, on the basis of the air conditioning system of the vehicle and the component to be cooled, by introducing the valve assembly that includes the first throttle valve and the second throttle valve arranged on the inlet side and the outlet side of the evaporator respectively, the thermal management system can better manage energy by switching the open/closed state of each valve in the valve assembly. In particular, for the two odor generating mechanisms, the switching of the valve assembly effectively suppresses/eliminates the generation of odors, thus improving the experience of the driver and passengers.

Heretofore, the technical solutions of the disclosure have been described with reference to the preferred embodiments shown in the accompanying drawings. However, those skilled in the art can readily understand that the scope of protection of the disclosure is apparently not limited to these specific embodiments. Those skilled in the art may make equivalent changes or substitutions to the related technical features without departing from the principle of the disclosure, and all the technical solutions with such changes or substitutions shall fall within the scope of protection of the disclosure.
Further preferred aspects of the disclosure relate to:
1. A thermal management system of a vehicle, the thermal management system comprising:
   an air conditioning system, comprising a compressor, an air handler assembly, and a heat exchanger, the air handler assembly comprising a condenser and an evaporator; and
   at least one component to be subjected to heat exchange;
   wherein the thermal management system further comprises a valve assembly, the valve assembly enabling at least some of the compressor, the air handler assembly, the heat exchanger, and the component to be subjected to heat exchange to form at least one refrigerant circuit;
   wherein the valve assembly comprises:
      a first throttle valve arranged on an inlet side of the evaporator; and
      a second throttle valve arranged on an outlet side of the evaporator.
2. The thermal management system according to aspect 1, wherein the component to be subjected to heat exchange is provided with an intermediate heat exchanger, and the valve assembly comprises:
   at least one third throttle valve arranged on an inlet side of the intermediate heat exchanger.
3. The thermal management system according to aspect 2, wherein the valve assembly comprises:
   a fourth throttle valve arranged on a first side of the heat exchanger.
4. The thermal management system according to any one of aspects 1 to 3, wherein the valve assembly comprises:
   a first regulating valve disposed between an exhaust port of the compressor and a second side of the heat exchanger; and
   a second regulating valve disposed between the exhaust port of the compressor and an inlet side of the condenser.
5. The thermal management system according to any one of aspects 1 to 4, wherein the valve assembly comprises:
   a stop valve disposed between the second side of the heat exchanger and an air return port of the compressor.
6. The thermal management system according to any one of aspects 1 to 5, wherein the thermal management system comprises a coaxial heat exchanger, and
   the stop valve is arranged between the second side of the heat exchanger and an inlet side of a low-pressure part of the coaxial heat exchanger.
7. The thermal management system according to any one of aspects 1 to 6, wherein the valve assembly comprises:
   a first check valve arranged on the first side of the heat exchanger and allowing a refrigerant to flow out of the first side of the heat exchanger only; and/or
   a second check valve arranged on an outlet side of the condenser and allowing the refrigerant to flow out of the outlet side of the condenser only.
8. The thermal management system according to any one of aspects 1 to 7, wherein the air handler assembly comprises a heating component capable of directly heating air delivered into a cabin of the vehicle; and/or
   the air conditioning system comprises a gas-liquid separator arranged at the air return port of the compressor; and/or
   the air conditioning system comprises a liquid reservoir arranged on the outlet side of the condenser.
9. The thermal management system according to any one of aspects 5, or 6, or to 7 to 8, wherein the at least one refrigerant circuit comprises:
   a refrigerant circuit formed of the compressor → a converging part → the first throttle valve → the evaporator → the second throttle valve → the compressor; and
   a refrigerant circuit formed of the compressor → a converging part → the at least one third throttle valve → the intermediate heat exchanger corresponding to the at least one third throttle valve → the compressor;
   wherein the converging part refers to
   the part where the refrigerant converges after flowing through the first regulating valve and the heat exchanger, and the second regulating valve and the condenser, respectively, from the compressor.
10. The thermal management system according to any one of aspects 5 or 6, or 7 to 9, wherein the at least one refrigerant circuit comprises:
   a refrigerant circuit formed of the compressor → a converging part → the first throttle valve → the evaporator → the second throttle valve → the compressor;
   wherein the converging part refers to
   the part where the refrigerant converges after flowing through the first regulating valve and the heat exchanger, and the second regulating valve and the condenser, respectively, from the compressor.
11. The thermal management system according to any one of aspects 5 or 6, or 7 to 10, wherein the at least one refrigerant circuit comprises:
   a refrigerant circuit formed of the compressor → the first regulating valve → the heat exchanger → the first throttle valve → the evaporator → the second throttle valve → the compressor; and
   a refrigerant circuit formed of the compressor → the first regulating valve → the heat exchanger → the at least one third throttle valve → the intermediate heat exchanger corresponding to the at least one third throttle valve → the compressor.
12. The thermal management system according to any one of aspects 5 or 6, or 7 to 11, wherein the at least one refrigerant circuit comprises:
   a refrigerant circuit formed of the compressor → the first regulating valve → the heat exchanger → the first throttle valve → the evaporator → the second throttle valve → the compressor; and
   a refrigerant circuit formed of the compressor → the first regulating valve → the heat exchanger → the at least one third throttle valve → the intermediate heat exchanger corresponding to the at least one third throttle valve → the compressor.
13. The thermal management system according to any one of aspects 5 or 6, or 7 to 12, wherein the at least one refrigerant circuit comprises:
   a refrigerant circuit formed of the compressor → the second regulating valve → the condenser → the fourth throttle valve → the heat exchanger → the stop valve → the compressor; and
   a refrigerant circuit formed of the compressor → the second regulating valve → the condenser → the at least one third throttle valve → the intermediate heat exchanger corresponding to the at least one third throttle valve → the compressor;
14. A vehicle, comprising a thermal management system of a vehicle according to any one of aspects 1 to 13.
15. A method for controlling a thermal management system according to any one of aspects 5 to 6 and 9, wherein the control method comprises:
   opening the first regulating valve, the second regulating valve, the first throttle valve, the second throttle valve and the third throttle valve; and
   closing the fourth throttle valve and the stop valve, such that
   cold generated by a refrigerant circuit is apportioned by the at least one component to be subjected to heat exchange.
16. A method for controlling a thermal management system according to any one of aspects 5 to 6 and 10, wherein the control method comprises:
   opening the first regulating valve, the second regulating valve, the first throttle valve and the second throttle valve; and
   closing the third throttle valve, the fourth throttle valve and the stop valve, such that
   the refrigerant is further throttled by means of the second throttle valve, so as to reduce the refrigerant in the refrigerant circuit.
17. A method for controlling a thermal management system according to any one of aspects 5 to 6 and 11, wherein the control method comprises:
   opening the first regulating valve, the first throttle valve, the second throttle valve and the third throttle valve; and
   closing the second regulating valve, the fourth throttle valve and the stop valve;
   wherein the first throttle valve is opened with an opening degree not less than a set opening degree.
18. The method for controlling a thermal management system according to any one of aspects 5 to 6 and 12, wherein the control method comprises:
   opening the first regulating valve, the first throttle valve and the second throttle valve, and allowing the at least one third throttle valve to be opened, and
   closing the second regulating valve, the fourth throttle valve and the stop valve, such that
   the cabin space of the vehicle can obtain cold by means of the evaporator, and
   the at least one component to be subjected to heat exchange corresponding to the at least one third throttle valve is cooled when the at least one third throttle valve is opened.
19. The method for controlling a thermal management system according to any one of aspects 5 to 6 and 13, wherein the control method comprises:
   opening the second regulating valve, the fourth throttle valve and the stop valve while allowing the at least one third throttle valve to be opened, and
   closing the first regulating valve and the first throttle valve, so as to
   release heat to the cabin space of the vehicle on the basis of recovering heat of at least one component to be subjected to heat exchange.
20. A computer-readable storage medium, wherein the storage medium is adapted to store a plurality of program codes, and the program codes are adapted to be loaded and run by a processor to perform the method for controlling a thermal management system of a vehicle according to any one of aspects 15 to 19.
21. A computer device, comprising a memory and a processor, wherein the memory is adapted to store a plurality of program codes, and the program codes are adapted to be loaded and run by the processor to perform the method for controlling a thermal management system of a vehicle according to any one of aspects 15 to 19.

## Claims

1. A thermal management system of a vehicle, the thermal management system comprising:
an air conditioning system, comprising a compressor, an air handler assembly, and a heat exchanger, the air handler assembly comprising a condenser and an evaporator; and
at least one component to be subjected to heat exchange;
wherein the thermal management system further comprises a valve assembly, the valve assembly enabling at least some of the compressor, the air handler assembly, the heat exchanger, and the component to be subjected to heat exchange to form at least one refrigerant circuit;
wherein the valve assembly comprises:
a first throttle valve arranged on an inlet side of the evaporator; and
a second throttle valve arranged on an outlet side of the evaporator.

2. The thermal management system according to claim 1, wherein the component to be subjected to heat exchange is provided with an intermediate heat exchanger, and the valve assembly comprises:
at least one third throttle valve arranged on an inlet side of the intermediate heat exchanger.

3. The thermal management system according to claim 2, wherein the valve assembly comprises:
a fourth throttle valve arranged on a first side of the heat exchanger.

4. The thermal management system according to any one of claims 1 to 3, wherein the valve assembly comprises:
a first regulating valve disposed between an exhaust port of the compressor and a second side of the heat exchanger; and
a second regulating valve disposed between the exhaust port of the compressor and an inlet side of the condenser.

5. The thermal management system according to any one of claims 1 to 4, wherein the valve assembly comprises:
a stop valve disposed between the second side of the heat exchanger and an air return port of the compressor.

6. The thermal management system according to any one of claims 1 to 5, wherein the thermal management system comprises a coaxial heat exchanger, and
the stop valve is arranged between the second side of the heat exchanger and an inlet side of a low-pressure part of the coaxial heat exchanger.

7. The thermal management system according to any one of claims 1 to 6, wherein the valve assembly comprises:
a first check valve arranged on the first side of the heat exchanger and allowing a refrigerant to flow out of the first side of the heat exchanger only; and/or
a second check valve arranged on an outlet side of the condenser and allowing the refrigerant to flow out of the outlet side of the condenser only.

8. The thermal management system according to any one of claims 1 to 7, wherein the air handler assembly comprises a heating component capable of directly heating air delivered into a cabin of the vehicle; and/or
the air conditioning system comprises a gas-liquid separator arranged at the air return port of the compressor; and/or
the air conditioning system comprises a liquid reservoir arranged on the outlet side of the condenser.

9. The thermal management system according to any one of claims 5, or 6, or to 7 to 8, wherein the at least one refrigerant circuit comprises:
a refrigerant circuit formed of the compressor → a converging part → the first throttle valve → the evaporator → the second throttle valve → the compressor; and
a refrigerant circuit formed of the compressor → a converging part → the at least one third throttle valve → the intermediate heat exchanger corresponding to the at least one third throttle valve → the compressor;
wherein the converging part refers to
the part where the refrigerant converges after flowing through the first regulating valve and the heat exchanger, and the second regulating valve and the condenser, respectively, from the compressor.

10. The thermal management system according to any one of claims 5 or 6, or 7 to 9, wherein the at least one refrigerant circuit comprises:
a refrigerant circuit formed of the compressor → a converging part → the first throttle valve → the evaporator → the second throttle valve → the compressor;
wherein the converging part refers to
the part where the refrigerant converges after flowing through the first regulating valve and the heat exchanger, and the second regulating valve and the condenser, respectively, from the compressor.

11. The thermal management system according to any one of claims 5 or 6, or 7 to 10, wherein the at least one refrigerant circuit comprises:
a refrigerant circuit formed of the compressor → the first regulating valve → the heat exchanger → the first throttle valve → the evaporator → the second throttle valve → the compressor; and
a refrigerant circuit formed of the compressor → the first regulating valve → the heat exchanger → the at least one third throttle valve → the intermediate heat exchanger corresponding to the at least one third throttle valve → the compressor.

12. The thermal management system according to any one of claims 5 or 6, or 7 to 11, wherein the at least one refrigerant circuit comprises:
a refrigerant circuit formed of the compressor → the first regulating valve → the heat exchanger → the first throttle valve → the evaporator → the second throttle valve → the compressor; and
a refrigerant circuit formed of the compressor → the first regulating valve → the heat exchanger → the at least one third throttle valve → the intermediate heat exchanger corresponding to the at least one third throttle valve → the compressor.

13. The thermal management system according to any one of claims 5 or 6, or 7 to 12, wherein the at least one refrigerant circuit comprises:
a refrigerant circuit formed of the compressor → the second regulating valve → the condenser → the fourth throttle valve → the heat exchanger → the stop valve → the compressor; and
a refrigerant circuit formed of the compressor → the second regulating valve → the condenser → the at least one third throttle valve → the intermediate heat exchanger corresponding to the at least one third throttle valve → the compressor;

14. A vehicle, comprising a thermal management system of a vehicle according to any one of claims 1 to 13.
